# FASCICULE DE BREVET EUROPEEN

(11) **EP 3 044 020 B1**
(45) Date de publication et mention de la délivrance du brevet: **02.10.2019**
(21) Numéro de dépôt: 14755882.9
(22) Date de dépôt: 05.08.2014
(51) Int. Cl.: B60J 5/10, B60J 1/18

(54) **HAYON POUR VÉHICULE AUTOMOBILE AVEC OSSATURE DE SUPPORT ET VÉHICULE CORRESPONDANT**
HECKKLAPPE EINES KRAFTFAHRZEUGS MIT EINEM STÜTZRAHMEN UND ENTSPRECHENDES FAHRZEUG
MOTOR VEHICLE TAILGATE COMPRISING A SUPPORT FRAME AND CORRESPONDING VEHICLE

(30) Priorité: 11.09.2013 FR 1358750
(43) Date de publication de la demande: 20.07.2016
(73) Titulaire: Renault S.A.S., 92100 Boulogne-Billancourt (FR)
(72) Inventeur: DENIS, Gerald, F-78180 Montigny le Bretonneux (FR)
(86) Numéro de dépôt international: PCT/FR2014/052036
(87) Numéro de publication internationale: WO 2015/036671

(56) Documents cités:
- EP-A1- 1 369 273
- EP-A2- 0 695 848
- DE-A1-102007 039 808
- JP-A- 2001 171 354
- US-A1- 2011 241 376

## Description

### 1. Domaine de l'invention

La présente invention concerne le domaine des véhicules automobiles. Plus précisément, l'invention concerne un hayon et notamment un hayon comportant un panneau transparent monté sur une ossature de support. Elle vise également un véhicule automobile équipé d'un tel hayon.

### 2. Art antérieur

On connaît certains véhicules automobiles, voir par exemple le document US 2011/241376 A1, équipés d'un ouvrant tel qu'un hayon arrière permettant d'accéder au coffre et à l'habitacle du véhicule. Le hayon est monté mobile en partie supérieure sur la carrosserie du véhicule. Un tel hayon comprend une ossature de support, un panneau transparent en verre solidaire de ladite ossature, des éléments formant charnière et des moyens d'actionnement pour l'ouverture et la fermeture du hayon. Le panneau transparent est de grande dimension et occupe toute la surface du hayon donnant accès au coffre et à l'habitacle. En d'autres termes, la surface extérieure du hayon est un panneau transparent. Ce panneau transparent est pourvu généralement d'éléments tels qu'un essuie-glace qui nécessitent un perçage engendrant alors un affaiblissement et une fragilité de celui-ci. Pour limiter ce phénomène, l'ossature encadre généralement le panneau transparent sur toute sa périphérie afin de protéger le panneau transparent et augmenter sa résistance aux chocs dus aux objets se déplaçant dans le coffre ou aux accidents.

Toutefois, une ossature encadrant complètement le panneau transparent alourdit davantage le véhicule à cause notamment du poids de l'ossature qui est relativement élevé.

### 3. Objectifs de l'invention

L'invention a notamment pour objectif de pallier tout ou partie des inconvénients de l'art antérieur.

Un objectif de l'invention est de fournir un hayon équipé d'une ossature renforcée mécaniquement aux endroits sollicités mécaniquement sans alourdir notablement le véhicule.

Un autre objectif de l'invention est de proposer une solution qui soit simple, universelle et peu coûteuse.

### 4. Résumé de l'invention

Ces objectifs sont atteints grâce à un hayon pour véhicule automobile destiné à être monté mobile en partie supérieure sur la carrosserie dudit véhicule, le hayon comprenant une ossature de support, un panneau transparent solidaire de ladite ossature, des éléments formant charnière et des moyens d'actionnement pour l'ouverture et la fermeture du hayon, l'ossature étant remarquable en ce qu'elle présente une section générale en U disposée entre une partie supérieure et une partie inférieure du panneau transparent.

Ainsi, la configuration de l'ossature de support disposée sur le panneau transparent permet d'augmenter la résistance mécanique. Elle permet notamment un gain de poids qui permet la fabrication d'un hayon à moindre coût puisque l'ossature est disposée et s'étend qu'aux endroits nécessaires à la résistance mécanique du panneau transparent. En effet, certaines portions de l'ossature n'étant pas sollicitées mécaniquement, il n'est donc pas nécessaire de prévoir ces portions d'ossature ou d'augmenter leurs épaisseurs ou de prévoir un matériau de résistance mécanique élevée.

Selon une caractéristique de l'invention favorisant la bonne résistance mécanique du panneau transparent, l'ossature comprend deux montants latéraux et un panneau en prolongement des montants, l'ossature de support en U étant ouverte vers le haut.

Selon un mode de réalisation, les montants latéraux présentent chacune une extrémité distale connectée à une platine de renfort configurée pour renforcer l'extrémité des montants davantage sollicitées mécaniquement par des liaisons mécaniques.

De manière avantageuse, chaque platine de renfort est liée auxdits éléments formant charnière et/ou aux moyens d'actionnement. Cette configuration permet d'améliorer la résistance mécanique de l'ossature qu'aux endroits où il existe une liaison mécanique entrainant des contraintes élevées pour obtenir alors un gain économique et de poids.

Encore dans le même but que précédemment, le panneau présente une paroi recevant au moins un organe de renfort des moyens de verrouillage du hayon. En effet, les moyens de verrouillage du hayon sur la carrosserie subissent des contraintes mécaniques élevées, du fait de l'actionnement de la poignée de fermeture.

Selon un mode de réalisation de l'invention, le panneau peut comprendre au moins une ouverture de sorte à permettre un gain de poids. Ces ouvertures peuvent être placées de part et d'autre de la paroi du panneau et/ou en partie supérieure de la paroi du panneau, à l'opposé de l'organe de renfort.

Selon une caractéristique importante de l'invention, au moins les platines de renfort et l'organe de renfort des moyens de verrouillage du hayon présentent une épaisseur supérieure aux montants latéraux et au panneau de l'ossature de support de sorte à renforcer mécaniquement ces parties de l'ossature subissant les plus de contraintes.

De manière avantageuse, l'ossature peut comprendre un matériau métallique, par exemple une tôle emboutie.

Pour permettre une meilleure résistance du hayon, l'ossature est formée d'un seul tenant.

L'invention concerne également un véhicule automobile équipé d'un hayon présentant les caractéristiques telles que susmentionnées.

### 5. Liste des figures

D'autres caractéristiques et avantages innovants ressortiront de la description ci-après, fournie à titre indicatif et nullement limitatif, en référence aux dessins annexés, dans lesquels :
- La figure 1 est une représentation partielle de l'arrière d'un véhicule comprenant un hayon selon l'invention ;
- La figure 2 est une vue en coupe selon le plan A-A de la figure 1 ;
- La figure 3 illustre une face interne du hayon orientée vers le coffre et l'habitacle du véhicule ; et,
- La figure 4 est une vue en perspective de l'ossature du hayon selon l'invention.

### 6. Description détaillée

La présente invention se rapporte à un hayon 1 pour véhicule 2 automobile.

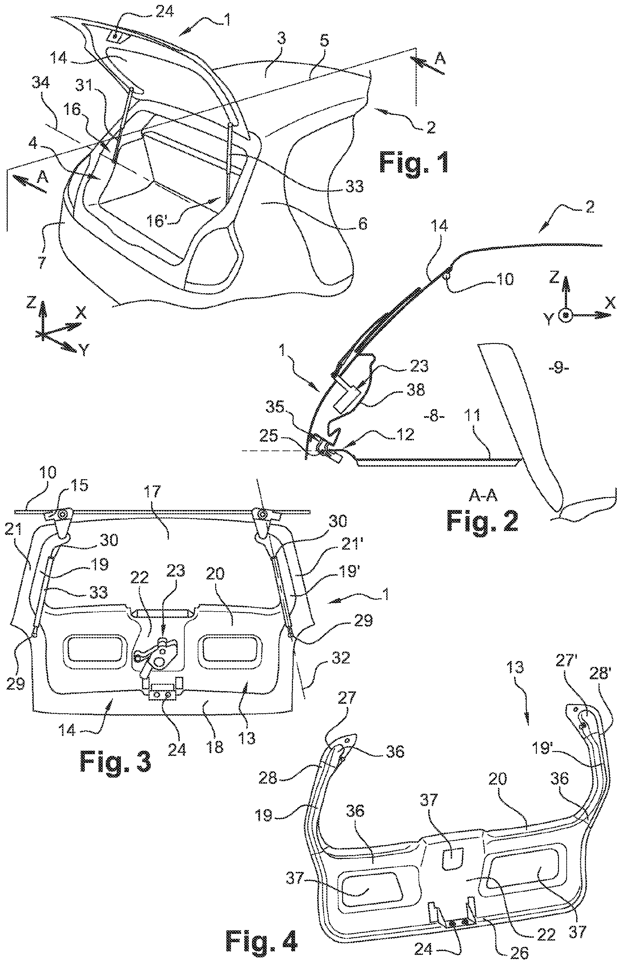

Dans la suite de la description, pour faciliter encore la compréhension de l'invention, on considère que le véhicule 2 comprend une carrosserie 3 allongée suivant une direction longitudinale X. Est également représentée la direction transversale Y qui est perpendiculaire à la direction longitudinale X et à une direction verticale Z de sorte que ces trois directions X, Y, Z forment un repère orthogonal direct tel qu'illustré sur la figure 1.

Les termes « inférieur », « supérieur », « haut », « bas » et « latéral » sont définis par rapport à la direction verticale Z et les termes « avant » et « arrière » sont définis par rapport à la direction X.

Sur la figure 1, la carrosserie 3 présente une ouverture 4 située à l'arrière du véhicule et délimitée par un pavillon 5 en partie supérieure du véhicule, des panneaux de custode 6 et un bouclier 7 en partie inférieure du véhicule 2. L'ouverture 4 donne accès au coffre 8 et à l'habitacle 9. Le hayon 1 est monté mobile en partie supérieure sur la carrosserie 3 entre une position ouverte et une position fermée de cette ouverture 4. Plus précisément, le hayon 1 est articulé suivant un axe de rotation 10 parallèle à la direction Y au niveau du bord arrière du pavillon 5. Sur la figure 1 le hayon est représenté dans sa position ouverte. Ici, le coffre 4 est muni d'un plancher 11 de coffre affleurant avec des moyens de fermeture 12 de coffre que comprend le bouclier 7. Dans cette configuration, les objets disposés sur le plancher 11 peuvent être projetés sur le panneau transparent en cas d'accélération ou de freinage brusque du véhicule 2.

Le hayon 1 comprend une ossature 13 de support, un panneau 14 transparent solidaire de ladite ossature 13, des éléments 15, 15' formant charnière et des moyens d'actionnement 16 pour l'ouverture et la fermeture du hayon 1.

Le panneau transparent 14 est en verre ou en un matériau plastique tel que du polycarbonate (PC). Le panneau 14 transparent présente une surface sensiblement plane. Elle peut être plus ou moins courbée selon la forme de la carrosserie 3. Le panneau transparent 14 présente une partie supérieure 17 et une partie inférieure 18. Il présente sensiblement les dimensions de l'ouverture 4.

Selon l'invention, l'ossature 13 présente une section générale en U disposée entre la partie supérieure 17 et la partie inférieure 18 du panneau transparent 14. L'ossature 13 de support comprend un matériau métallique. De préférence, il s'agit de l'acier. De manière plus précise, l'ossature 13 de support comprend des montants 19, 19' latéraux et un panneau 20 en prolongement de ces montants 19 latéraux. Le panneau 20 présente une section sensiblement rectangulaire. L'ossature 13 de support en U est ouverte vers le haut. Les montants 19, 19' latéraux sont agencés sensiblement de manière parallèle au bord 21, 21' latéraux de la partie supérieure 17 du panneau transparent 14. Le panneau 20 permet d'absorber les chocs d'objets et de protéger le hayon 1 en partie inférieure 18.

Sur les figures 3 et 4 est illustré plus précisément le panneau 20 qui présente une paroi 22 destiné à recevoir des moyens 23 permettant de câbler électriquement et mécaniquement des modules compris dans la liste suivante : commande d'essuie-glace arrière pour un essuie-glace, essuie-glace arrière, feu stop arrière, commande de verrouillage du hayon, lave glace. La paroi 22 du panneau 20 reçoit encore au moins un organe de renfort 24 des moyens de verrouillage 35 du hayon. Ces moyens de verrouillage 35 comprennent une gâche 25 destinée à être montée sur cet organe de renfort 24. Les moyens de verrouillage 35 coopèrent avec les moyens de fermeture 12 installés sur le bord supérieure du bouclier 7. L'organe de renfort 24 est fixé au voisinage de la bordure inférieure 26 de la paroi 22 et dans la partie médiane de celle-ci. L'organe de renfort 24 est constitué d'un profilé métallique présentant en vue de côté droit une forme triangulaire (voir figure 1). En vue de face (voir figure 4), l'organe de renfort 24 présente un profil en forme de U. Le matériau métallique ici est également un acier présentant une très bonne résistance mécanique. Pour cela, l'organe de renfort 24 présente une épaisseur comprise entre 1,0 et 2,0 mm. L'épaisseur de l'organe de renfort 24 est supérieure à celles des montants 19, 19' latéraux et du panneau 20 de l'ossature 13 de support. Les épaisseurs des montants 19, 19' latéraux et du panneau 20 sont comprises entre 0,5 et 1,0 mm.

Le panneau 20 comprend également au moins une ouverture 37 ou découpe. Sur les figures 3 et 4, le panneau 20 comprend 3 ouvertures 37 qui permettent d'alléger le poids de l'ossature. Une garniture 38, présentant sensiblement les mêmes dimensions du panneau 20, vient recouvrir la face interne du panneau 20 orientée vers le coffre 8.

Le hayon 1 comprend encore des platines 27, 27' de renfort. Comme on peut le voir en particulier sur la figure 4, chaque montant 19, 19' latéral présente une extrémité distale 28, 28' (extrémité libre des branches du U). Chacune de ces extrémités 28, 28' est connectée à une platine 27, 27' de renfort. Ces platines 27, 27' de renfort sont de taille réduite. Elles présentent sensiblement une largeur identique à celle des montants 19, 19'. Les platines 27, 27' sont liées chacune à un élément 15, 15' formant charnière pour l'articulation du hayon sur la carrosserie 3 du véhicule suivant l'axe 10. Les éléments 15, 15' formant charnière sont également de taille réduite. Ces platines 27, 27' de renfort présentent une épaisseur sensiblement égale à celle de l'organe de renfort 24, c'est-à-dire entre 1,0 et 2,0 mm. De la sorte, on apporte de la résistance mécanique à l'endroit où l'ossature 13 de support subit le plus de contraintes mécaniques.

Les platines 27, 27' de renfort sont également liées aux moyens d'actionnement 16, 16' pour l'ouverture et la fermeture du hayon 1. Les moyens d'actionnement 16, 16' sont de préférence des vérins. Chaque vérin comprend une première extrémité 29 liée à une platine 27, 27' de renfort et une deuxième extrémité 30 opposée à la première 29. La deuxième extrémité 30 est montée sur un des panneaux custode 6 de la carrosserie 3 (sur la face interne du panneau custode 6). Cette deuxième extrémité correspond à la tige d'un piston 31 montée mobile suivant un axe de déplacement 32 en translation dans le cylindre 33 du vérin et est également montée en rotation par rapport à la carrosserie suivant un axe de rotation 34 sensiblement parallèle à la direction Y. Le vérin exerce une force en direction du hayon, en particulier, suivant une direction parallèle à son axe de déplacement 32 en translation d'où le besoin de renfort.

Les platines de renfort 27, 27', les montants 19, 19' latéraux et le panneau 20 formant l'ossature 13 de support sont montés pour être formés d'un seul tenant afin de rendre le panneau transparent 14 assez résistant. Chaque pièce de l'ossature 13 comporte également des bossages 36 encore dans le but de renforcer l'ossature 13. Ce dernier est fixé au panneau transparent 14 au moyen de fixations choisis dans le groupe comprenant : soudure, colle. Les différentes pièces de l'ossature 13 sont solidarisées entre elles également au moyen de colle, soudure, vis, rivet, et autres moyens adaptés.

## Revendications

1. Hayon (1) pour véhicule (2) automobile destiné à être monté mobile en partie supérieure sur la carrosserie (3) dudit véhicule (2), le hayon (1) comprenant une ossature (13) de support, un panneau transparent (14) solidaire de ladite ossature (3) et des éléments (15, 15') formant charnière et des moyens d'actionnement (16, 16') pour l'ouverture et la fermeture du hayon (1) **caractérisé en ce que** ladite ossature (13) présente une section générale en U disposée entre une partie supérieure (17) et une partie inférieure (18) du panneau transparent (14).

2. Hayon (1) selon la revendication 1, **caractérisé en ce que** l'ossature comprend deux montants (19, 19') latéraux et un panneau (20) en prolongement des montants (19, 19'), l'ossature (13) de support en U étant ouvert vers le haut.

3. Hayon (1) selon la revendication 2, **caractérisé en ce que** les montants (19, 19') latéraux présentent chacune une extrémité distale (28, 28') connectée à une platine (27, 27') de renfort.

4. Hayon (1) selon la revendication 3, **caractérisé en ce que** chaque platine (27, 27') de renfort est liée auxdits éléments (15, 15') formant charnière.

5. Hayon (1) selon la revendication 3 ou 4, **caractérisé en ce que** chaque platine (27, 27') de renfort est liée aux moyens d'actionnement (16, 16').

6. Hayon (1) selon l'une quelconque des revendications précédentes, **caractérisé en ce que** le panneau (20) présente une paroi (22) recevant au moins un organe (24) de renfort de moyens de verrouillage (35) du hayon (1).

7. Hayon (1) selon la revendication 6, **caractérisé en ce que** le panneau comprend au moins une ouverture (37).

8. Hayon (1) selon l'une quelconque des revendications 3 à 5 prises en combinaison avec la revendication 6 ou la revendication 7, **caractérisé en ce qu'**au moins les platines (27, 27') de renfort et l'organe (24) de renfort des moyens de verrouillage du hayon (1) présentent une épaisseur supérieure aux montants latéraux (19, 19') et au panneau (20) de l'ossature (13) de support.

9. Hayon (1) selon l'une quelconque des revendications précédentes, **caractérisé en ce que** l'ossature (13) comprend un matériau métallique.

10. Hayon (1) selon l'une quelconque des revendications précédentes, **caractérisée en ce que** l'ossature (13) de support est formée d'un seul tenant.

11. Véhicule (2) automobile **caractérisé en ce qu'**il comprend un hayon selon les revendications 1 à 10.

## Patentansprüche

1. Heckklappe (1) für ein Kraftfahrzeug (2), die dazu bestimmt ist, im oberen Teil beweglich an der Karosserie (3) des Fahrzeugs (2) angebracht zu werden, wobei die Heckklappe (1) einen Stützrahmen (13), eine fest mit dem Rahmen (3) verbundene transparente Scheibe (14) und ein Scharnier bildende Elemente (15, 15') und Betätigungsmittel (16, 16') zum Öffnen und Schließen der Heckklappe (1) umfasst, **dadurch gekennzeichnet, dass** der Rahmen (13) einen U-förmigen Grundquerschnitt aufweist, der zwischen einem oberen Teil (17) und einem unteren Teil (18) der transparenten Scheibe (14) angeordnet ist.

2. Heckklappe (1) nach Anspruch 1, **dadurch gekennzeichnet, dass** der Rahmen zwei seitliche Säulen (19, 19') und eine Scheibe (20) in der Verlängerung der Säulen (19, 19') umfasst, wobei der U-förmige Stützrahmen (13) nach oben offen ist.

3. Heckklappe (1) nach Anspruch 2, **dadurch gekennzeichnet, dass** die seitlichen Säulen (19, 19') jeweils ein distales Ende (28, 28') aufweisen, das mit einer Verstärkungsplatte (27, 27') verbunden ist.

4. Heckklappe (1) nach Anspruch 3, **dadurch gekennzeichnet, dass** jede Verstärkungsplatte (27, 27') mit den ein Scharnier bildenden Elementen (15, 15') verbunden ist.

5. Heckklappe (1) nach Anspruch 3 oder 4, **dadurch gekennzeichnet, dass** jede Verstärkungsplatte (27, 27') mit den Betätigungsmitteln (16, 16') verbunden ist.

6. Heckklappe (1) nach einem der vorhergehenden Ansprüche, **dadurch gekennzeichnet, dass** die Scheibe (20) eine Wand (22) aufweist, die mindestens ein Verstärkungsorgan (24) von Verriegelungsmitteln (35) der Heckklappe (1) aufnimmt.

7. Heckklappe (1) nach Anspruch 6, **dadurch gekennzeichnet, dass** die Scheibe mindestens eine Öffnung (37) umfasst.

8. Heckklappe (1) nach einem der Ansprüche 3 bis 5 in Verbindung mit Anspruch 6 oder Anspruch 7, **dadurch gekennzeichnet, dass** mindestens die Verstärkungsplatten (27, 27') und das Verstärkungsorgan (24) der Verriegelungsmittel der Heckklappe (1) eine größere Dicke als die seitlichen Säulen (19, 19') und die Scheibe (20) des Stützrahmens (13) aufweisen.

9. Heckklappe (1) nach einem der vorhergehenden Ansprüche, **dadurch gekennzeichnet, dass** der Rahmen (13) einen metallischen Werkstoff umfasst.

10. Heckklappe (1) nach einem der vorhergehenden Ansprüche, **dadurch gekennzeichnet, dass** der Stützrahmen (13) einteilig ausgebildet ist.

11. Kraftfahrzeug (2), **dadurch gekennzeichnet, dass** es eine Heckklappe nach einem der Ansprüche 1 bis 10 umfasst.

## Claims

1. Tailgate (1) for a motor vehicle (2) that is intended to be mounted movably at the top on the body (3) of said vehicle (2), the tailgate (1) comprising a support frame (13), a transparent panel (14) secured to said frame (3) and hinge-forming elements (15, 15') and actuating means (16, 16') for opening and closing the tailgate (1), **characterized in that** said frame (13) has a general U-shaped cross section arranged between an upper part (17) and a lower part (18) of the transparent panel (14).

2. Tailgate (1) according to Claim 1, **characterized in that** the frame comprises two lateral uprights (19, 19') and a panel (20) as an extension of the uprights (19, 19'), the U-shaped support frame (13) being open towards the top.

3. Tailgate (1) according to Claim 2, **characterized in that** the lateral uprights (19, 19') each have a distal end (28, 28') connected to a reinforcing plate (27, 27').

4. Tailgate (1) according to Claim 3, **characterized in that** each reinforcing plate (27, 27') is connected to said hinge-forming elements (15, 15').

5. Tailgate (1) according to Claim 3 or 4, **characterized in that** each reinforcing plate (27, 27') is connected to the actuating means (16, 16').

6. Tailgate (1) according to any one of the preceding claims, **characterized in that** the panel (20) has a wall (22) receiving at least one member (24) for reinforcing locking means (35) of the tailgate (1) .

7. Tailgate (1) according to Claim 6, **characterized in that** the panel comprises at least one opening (37) .

8. Tailgate (1) according to any one of Claims 3 to 5 taken in combination with Claim 6 or Claim 7, **characterized in that** at least the reinforcing plates (27, 27') and the member (24) for reinforcing the locking means of the tailgate (1) have a greater thickness than the lateral uprights (19, 19') and than the panel (20) of the support frame (13).

9. Tailgate (1) according to any one of the preceding claims, **characterized in that** the frame (13) comprises a metallic material.

10. Tailgate (1) according to any one of the preceding claims, **characterized in that** the support frame (13) is formed in one piece.

11. Motor vehicle (2), **characterized in that** it comprises a tailgate according to Claims 1 to 10.
